# EUROPÄISCHE PATENTSCHRIFT

(11) **EP 2 135 579 B1**
(45) Veröffentlichungstag und Bekanntmachung des Hinweises auf die Patenterteilung: **19.07.2017**
(21) Anmeldenummer: 09007775.1
(22) Anmeldetag: 12.06.2009
(51) Int. Cl.: A61C 13/28

(54) **Zahnprothesen mit Stabilisator-Feder**
Dental prosthetics with spring-stabiliser
Prothèses dentaires avec stabilisateur-ressort

(30) Priorität: 20.06.2008 DE 102008029086
(43) Veröffentlichungstag der Anmeldung: 23.12.2009
(73) Patentinhaber: Group Vander Kerken - Van der Veken N.V., 2000 Antwerpen (BE)
(72) Erfinder: Vander Kerken, André Jozef Ernest, 2000 Antwerpen (BE); Van der Veken, Pieter, 2640 Mortsel (BE)
(74) Vertreter: Dosterschill, Peter

(56) Entgegenhaltungen:
- WO-A-2007/016753
- DE-C- 351 232
- US-A- 2 666 988

## Beschreibung

Die Erfindung bezieht sich auf eine Zahnprothese nach dem Oberbegriff des Anspuchs 1.

Solcher Art Stabilisatoren für Zahnprothesen sind bereits in mehreren Ausführungsformen bekannt. Diese bestehen meist im wesentlichen aus zwei zueinander über ein Gelenk schwenkbeweglich miteinander verbundenen und über Federelemente auseinander gedrückten Arme, über welche die Ober- und die Unterprothesenhälfte beidseitig miteinander (rechts und links) gekoppelt sind.

So ist aus der DE 195 46 960 C2 ein Stabilisator für Zahnprothesen bekannt, bei dem die beiden Stabilisator-Arme jeweils über ein mit einer Schenkelfeder versehenes Gelenk gegeneinander abgefedert verbunden sind. An ihren freien Enden sind die Arme jeweils an der Außenseite der Prothesenhälften angeschraubt befestigt. Dabei sind die Stabilisatoren so angeordnet und dimensioniert, dass ihre Gelenke an bzw. nach Ihren rückwärtigen Enden der Prothesenhälften befinden. Dadurch, dass jedoch die Arme der Stabilisatoren in unveränderbarer Position an den Prothesenhälften angeordnet sind, können diese der natürlichen Bewegung der Zähne bzw. des Unterkiefers nicht folgen, da die natürliche Schwenkbewegung des menschlichen Unterkiefers um einen Punkt erfolgt, der sich weiter hinten im Kopf befindet. Auch besteht hier der Nachteil, dass bei Abnützung oder Bruch der Stabilisatorteile, z. B. Bruch einer Feder, dies nur sehr umständlich reparierbar ist. Eine ordnungsgemäße Reparatur kann nicht durch den Prothesenträger schnell und einfach durchgeführt werden, sondern nur durch einen Zahntechniker, da die Verschraubung der Prothesenarme mit den Prothesenteilen nur mit Spezialwerkzeugen lösbar sind. Aus der EP 1 046 380 A1 ist ein Stabilisator für Zahnprothesen bekannt, der ähnlich wie der vorhergehend beschriebene Stabilisator ausgebildet ist, wobei jedoch der obere Arm teleskopisch verlängerbar ausgebildet ist und mit seinem äußeren Ende an der Prothesenhälfte festgeschraubt ist, während der untere Arm über einen an seinem äußeren Ende vorgesehenen Nutenstein in einer Führungsnut in der unteren Prothesenhälfte längsverschieblich vorgesehen ist.
Zwar wird hierdurch eine größere Bewegungsfreiheit der Stabilisatoren und somit der oberen und unteren Prothesenhälften zueinander erreicht, so dass leichter eine natürliche Bewegung durchführbar ist. Dieser Zahnstabilisator besteht jedoch aus relativ vielen Einzelteilen, wodurch eine höhere Störanfälligkeit vorhanden ist. Zudem sind die Arme auch hier an den Außenseiten der Prothesenhälften beweglich angeordnet, wodurch bei Bewegung ein störendes Gefühl verursacht und sogar ein Einklemmen der inneren Wangenhaut möglich ist. Auch sind die Stabilisatoren in Ihrer Gänze außen an den Prothesen sichtbar, was von einigen Zahnprothesenträgern als optisch unschön und untragbar empfunden wird.
Aus der US 2,666,988 A ist eine federelastische Verbindung von Prothesenhälften bekannt, die darin besteht, dass beidseitig je eine Schenkelfeder vorgesehen ist, die mit ihren beiden ösenartig gebogenen Armenden in eine vertikal zur Kaufläche weisende Steck-Öffnung eingreift.

Aus der WO 2007/016753 A1 ist ein Stabilisator für Zahnprothesen bekannt, der nur aus einer zweiarmigen Schenkelfeder besteht, wobei die Stabilisator-Arme gleichzeitig die langen, bogenförmigen Enden der Schenkelfeder sind, die teleskopisch und axial gleitend bewegbar in zylindrischen Führungen der Prothesenhälften angeordnet sind. Durch die lose Verschieblichkeit in den Längsführungen können nun die Arme bedarfsweise gleiten, so dass eine natürliche Beweglichkeit der Prothesenhälften zueinander gegeben ist. Auch sind die Stabilisatorteile, zumindest die Arme, weitgehend vor Direktkontakt mit aggressiven Mitteln geschützt. Zudem ist der Tragkomfort insgesamt wesentlich erhöht, da die beweglichen Arme der Stabilisatoren nicht mehr in direktem Kontakt stehen mit den Innenseiten der Wangen des Prothesenträgers. Durch die Möglichkeit einer optimalen kurvenförmigen Ausbildung bzw. Führung der Stabilisatorarme in den entsprechend ausgebildeten Führungen, z. B. in der unteren Prothesenhälfte entsprechend einer Kurve von Spee (Kurve, welche der Profilform der Zahnreihe nachempfunden ist), während der obere Arm bzw. die Führung in der oberen Prothesenhälfte ebenfalls einen Bogenradius besonderer Ausführung besitzt, können, wenn der Mund geöffnet oder geschlossen wird, bzw. das Kinn auf und ab bewegt wird, die Stabilisatorarme optimal in den Führungen gleiten, ohne störend empfundene Bewegungsbehinderung und Reibung.
Nachteilig ist hier jedoch, dass sich die glatten Stabilisatorarme praktisch lose verschieblich in den Führungsbohrungen befinden, so dass bei Entnahme der Prothesenthälften die Arme aus den Führungen herausrutschen und insgesamt die Gefahr besteht, dass die Stabilisatoren abfallen und nicht oder (insbesondre aus Hygienegründen) nicht mehr ohne vorherige Wieder-Montage eingesetzt werden können. Zudem kann in die relativ langen Führungen Speichel und auch Essensreste eindringen, wobei die Reinigung dieser relativ engen Sackloch-Führungsbohrungen nicht oder nur sehr kompliziert möglich ist. Um dies zu vermeiden, sind die Stabilisatoren an Ihrem Federgelenk, bis zu den Führungsbohrungen, mit Kunststoff überzogen bzw. in Kunststoffhüllen eingebettet, die jedoch leicht reißen und zudem die Flexibilität des mittigen Schraubenfederteiles behindern.

Aus der DE 351232 C ist ein Federgebiss bekannt, bei dem die Schenkel / Arme der Feder in länglichen, in den Gebissenden eingesenkten Führungshülsen längsverschieblich hineinragen. Nahe dem inneren Ende der Hülsen sind diagonal gegenüberliegende, kurze Längsschlitze vorhanden, in denen einander gegenüberliegend nasenartige Vorsprünge gleiten, die in einer entsprechenden schlingenförmigen Ausbiegung der Schenkel-enden vorgesehen sind. Durch die einfache elastische Einrastung der Nasen in den Längschlitzen können diese leicht axial herausgezogen werden und bei Entnahme der Prothese aus dem Mund aus den Führungshülsen ungewollt heraus gleiten. Ein sicherer Längsanschlag ist somit nicht vorhanden.

Aufgabe der Erfindung ist es somit, einen Stabilisator für Zahnprothesen oben genannter Gattung anzugeben, der einfach und sicher in Ausführung, Montage bzw. Einbau oder Nachrüstung für den Zahntechniker bzw. Einbau oder Nachrüstung für den Zahntechniker, Tragekomfort und Hygiene (für den Träger) ist, auch vom Träger selbst leicht einsetz- oder entfern- bzw. austauschbar ist und nicht von alleine wieder auseinander fällt.
Diese Aufgabe wird mit den Merkmalen des Anspruchs 1 gelöst. Vorteilhafte Ausgestaltungen dazu sind in den Unteransprüchen aufgeführt.
Demgemäß sind die Führungen für die Stabilisator-Arme (gegen Auseinanderfallen) an ihren äußeren Einführenden bis auf eine schmale Verengung stirnseitig geschlossen. Zudem sind die Enden der Federarme mit Erweiterungen ausgestattet, z. B. flächigen Erweiterungen in Art einer Öse, Schlinge oder eines Hakens oder Bogens (eventuell mit an- oder eingesetztem Knopf-Flachteil oder Plättchen) oder als Kugel in Tropfform o. ä. geformt und so dimensioniert, dass sie durch die Verengung, oder den Einführschlitz der Führungen flach oder unter geringem Einschnapp-Widerstand durchsteckbar sind.

Bei einer weiteren vorteilhaften Ausführungsform sind die Einführschlitze der Führungen und die flachen Erweiterungen bzw. Ösen der Federarme so ausgebildet bzw. angeordnet, dass in eingebauter Funktionsstellung der Stabilisatoren die Erweiterungen/Ösen bzw. Ösenenden ca. senkrecht (vorzugsweise ca. 90° ± 20°) zur Längserstreckung der Verengungen bzw. Einführschlitze o. ä. ausgerichtet sind. Maßgeblich ist, dass durch die besondere Anordnung der Einführschlitze die Stabilisator-Arme nicht unbeabsichtigt, insbesondere in aus dem Munde entnommenen Zustand der Prothese, aus den Prothesenhälften herausrutschen. Um die Stabilisatoren in die jeweiligen Führungen der Prothesenhälften einzustecken bzw. einzuführen, müssen die Stabilisatoren bzw. deren Arme jeweils in zur Funktionsstellung senkrechter Position durch den Einführschlitz eingeschoben werden, um danach um ca. 90 ° verschwenkt in ihre Funktionsstellung gebracht zu werden. Selbstverständlich können auch andere bekannte konstruktive Lösungen zur Herauszieh-Wegbegrenzung der Federarme zum Einsatz kommen, wie z. B. ein Kugel-Ende der Federarme und eine geschlitzte elastische Membran, oder ein nach außen weisender (offener oder geschlossener) Haken am Federarm-Ende und eine mit diesem zusammenwirkende Außen-Stufe am Einführende des Führungsschlitzes. Dies bringt den großen Vorteil, dass der jeweilige Prothesenträger selbst bedarfsweise die Stabilisatoren seiner Prothese leicht und einfach und ohne jegliches Werkzeug auswechseln oder gar komplett entfernen kann, sofern ihn diese zumindest vorübergehend stören oder gebrochen sind, routinemäßig auszutauschen sind.

Die optimale Handhabbarkeit des Stabilisators kommt insbesondere dann zum Tragen, wenn z. B. ein Fremdkörper sich im Zwischenraum zwischen Feder und Gebiss verfängt und verkeilt. Das Gebiss kann dann vom Träger herausgenommen und durch Drehen am Federgehäuse, welches jetzt als eine Art Griffstück funktioniert, können die Federarme aus dem Gebiss herausgedreht bzw. verschwenkt und herausgezogen werden. Das Gebiss kann danach wie ein normales Gebiss ohne Klammern bzw. gefederte Stabilisatoren sofort weiter verwendet werden, all das mit wenigen Griffen bzw. Bewegungen und ohne Werkzeuge.

Die Führungen für die Stabilisator-Arme können als einfache, entsprechend lange Bohrungen im Prothesenkörper vorgesehen sein, eingebracht von der Prothesenrückseite aus, wobei dann die Öffnung z. B. über ein Plättchen oder ähnliches mit entsprechendem Einführschlitz rück- bzw. einführseitig verschlossen ausgeführt ist oder durch entsprechenden sonstigen Materialauftrag oder ein Verschlußelement wie Schnappverschluß, um einen funktionsfähigen Einführschlitz in Art eines Briefkastenschlitzes o. ä. Verengung bereitzustellen. Die Einbringung, insbesondere die nachträgliche Einbringung von entsprechend bogenförmig ausgeführten Führungsbohrungen ist jedoch nur sehr komplex durchführbar. Auch muss der Einführungsschlitz, wie vorhergehend beschrieben, noch abschließend mit entsprechendem Materialauftrag, auch als zusätzliches geschlitztes Plättchen o. ä., vorgesehen werden. Von besonderem Vorteil ist daher, wenn die Führungen als rohrförmige Führungshülsen vorgesehen sind, die in dem Prothesenmaterial so eingebettet sind, dass ihr äußeres Einführende stirnseitig an der Rückseite der jeweiligen Prothesenseite endet, vorzugsweise bündig zu diesem oder mit diesem. Es wird somit in das Trägermaterial der Prothesenhälfte als Führung in entsprechend große Bogen-Ausnehmungen jeweils eine Führungshülse eingesetzt bzw. eingebettet, die in Größe und Form entsprechend der gewünschten Führung bzw. Lage der Stabilisator-Arme ausgelegt sind. Damit entfällt relativ komplexe Arbeit, wobei diese Führungshülsen bereits an ihrem einen offenen Ende stirnseitig auf den benötigten Einführschlitz (Verengung) geschlossen zur Verfügung stellbar sind.

Es ist dabei auch zu erkennen, dass diese Führungshülsen zwar längsseitig, d. h. in Richtung des Verlaufs der Zahnreihe in eine entsprechend eingebrachte Bohrung einsetzbar sind. Jedoch ist hier zudem die sehr vereinfachende Möglichkeit gegeben, diese Führungshülsen in seitlich eingebrachte kanalförmige Ausnehmungen einzuführen und die verbleibenden Zwischenräume danach so mit entsprechendem Material wieder an- bzw. aufzufüllen, dass dieser Eingriff so gut wie unsichtbar bleibt. Da diese gekrümmten Ausnehmungen oder Nuten somit seitlich von außen her leicht einbringbar sind, z. B. durch Fräsen oder Schleifen, ist die nachträgliche Einbringbarkeit der Führungshülsen ohne weitere Probleme sehr rasch und sauber möglich.

Die Ösen bzw. Haken der Armenden des Stabilisators können in gleicher Ebene mit dem Arm gebogen sein, d. h. die Arme und ihre Ösen befinden sich im Wesentlichen in gleicher Ebene. Das heißt wiederum, dass in eingebautem Zustand, in welchem der Stabilisator insgesamt in einer vertikalen Ebene zu liegen kommt, auch die jeweiligen Ösen in dieser vertikalen Ebene liegen. Das hat auch die Konsequenz, dass dann auch die Einführschlitze an den Führungshülsen, die bekanntlich senkrecht zu der Ausrichtung der Ösen vorzusehen sind, in entsprechender horizontaler Ausrichtung vorgesehen sind. Nachdem auch die Durchlüftungsöffnungen bzw. die Belüftungsröhrchen an der Führungshülse in eingebautem Zustand horizontal abragen, ist der Einführungsschlitz in gleicher Ausrichtung mit diesen anzuordnen bzw. vorzusehen, was auch eine Vereinfachung in deren Auslegung bedeutet. Dabei wirkt der Einführschlitz gleichzeitig auch als Gleitlager bei lateraler Bewegung des Gebisses.

Vorteilhaft ist, wenn nahe (z. B. in Abstand von 2 bis 3 mm) zu den Ösen an den Armen je eine ca. perlenförmige Pastille (Kugel, Kalotte, Zylinder, Oval) fest angebracht ist. Die aus Glas, Kunststoff oder Edelstahl bestehenden Pastillen sind geringfügig dicker als die Breite der (Briefkasten-) Schlitze, vorzugsweise um 0,2 bis 0,3 mm. Sie bilden einen Schnappverschluß, so dass sich der Schlitz beim Herausziehen elastisch verformt (oder die Pastille oder beide). Dies bewirkt, dass im Falle des kompletten Auseinanderklappens der Prothesenhälften und möglichem Kippen der Arme, so dass sich die Ösen parallel zu den Einführschlitzen ausrichten, die Arme nicht herausgleiten, sondern mit den Pastillen am Schlitz innen anstehen. Mit einem leichten Druck können dann die Pastillen durch den Schlitz gezogen und danach der gesamte Arm herausgezogen werden. Mit leichtem Druck kann anschließend der Arm wieder eingeführt werden.
Herstelltechnisch vereinfachend wirkt sich dabei aus, wenn die Ösen zusammen mit der jeweilig zugeordneten Perle als separate Einheit ausgeführt werden, die auf gerade (einfach abgeschnittene) Armenden aufgeschoben oder festgeklemmt werden. Als Herausfall-Schutz kann aber auch vorgesehen sein, dass bei Vorhandensein an den Enden der Federarme von geschlossenen Ösen oder teilgeschlossenen Ösen / Haken diese Ösen / Haken geringfügig breiter ausgelegt sind, als die Länge der Einführschlitze und in dieser Querrichtung elastisch zusammendrückbar sind. Das Herausziehen oder Einführen der Arme durch die Einführschlitze erfolgt dann unter leichtem Zug oder Druck, elastisch ein- oder ausschnappend.

Von besonderem Vorteil ist, wenn die Führungshülsen Kunststoffröhrchen sind, deren Inneres (in eingebautem Zustand) über mindestens ein, vorzugsweise drei in dessen Längsrichtung hintereinander angeordnete Löcher bzw. radiale seitliche Öffnungen mit der Außenseite der Prothesenteile in Verbindung steht, wodurch Spül- bzw. Belüftungslöcher gebildet sind. Somit kann in die Führungsbohrungen eingetretener Speichel oder gar Essensreste durch die seitlichen Belüftungslöcher wieder austreten. Zudem können bei der Pflege des Gebisses in dessen herausgenommenem Zustand die Führungsbohrungen ordnungsgemäß durchgespült werden, so dass keine Essensreste oder Speichel längere Zeit in den Führungen verbleiben und verderben und somit unter anderem zu schlechtem Mundgeruch führen.

In vorteilhafter Weise können die Belüftungslöcher auch ins Mundinnere (Zungenseite) geführt sein, so daß ein Saugeffekt vom Mundinneren, Durchblasen, Durchspritzen oder mit Bürste und Spülen noch effektiver gereinigt werden kann.

Dadurch, dass die Führungshülse bereits in Art eines Kunststoffröhrchens ausbildbar ist, besteht nun die Möglichkeit, auch die radialen Öffnungen durch Einbringung von entsprechenden Kunststoffröhrchen vorzusehen. Selbstverständlich könnte nach Einbringung der Führungshülsen jeweils entsprechende Röhrchen in radialer Ausrichtung für die Belüftungslöcher angebracht werden. Sinnvoller und weitaus einfacher ist jedoch, die jeweiligen Kunststoffröhrchen, also dasjenige der Führungshülse und diejenigen der Belüftungslöcher zu einem einstückigem Gebilde zusammengefasst werden, einen kammförmigen oder beidseitig gezahnten Führungsrechen bildend. Hierdurch ist eine relativ rasche und einfache sowie sichere Nachrüstung von Gebissen mit Stabilisatoren möglich.

Um den Tragekomfort zu erhöhen, eventuelle Probleme durch den direkten Kontakt mit dem metallischen Gelenk der Stabilisatoren zu vermeiden und insbesondere ein mögliches Verklemmen oder Festsetzen von Essensresten in den Gelenkwindungen der Schenkelfedern der Stabilisatoren zu unterbinden oder wesentlich zu verringern, ist von Vorteil, wenn der Schraubenfederteil, d. h. der Gelenkteil von einer Kunststoffspule axial gehalten bzw. umfasst wird. Diese Kunststoffspule kann dabei im Wesentlichen aus zwei Flanschteilen bestehen, die in Art eines Druckknopfes ausgebildet und axial zusammendrückbar und arretierbar oder verklebbar sind. Hierdurch werden die Federflanschteile die Feder außen bzw. stirnseitig anliegend umfassen und die Spiralwindungen der Stabilisatorfeder werden auf vorgegebenes Maß axial zusammengehalten. Durch den flächigen, leicht bombiert abgerundeten Kopfteil einer solchen Kunststoffspule wird durch den Wangenkontakt die Position stabilisiert und der Tragekomfort wesentlich erhöht. Dabei entsprechen die Fläche und Wölbung der Kunststoffspule ca. der Seitenfläche eines Backenzahnes. Die Kunststoffspule dient zudem bei der Montage als relativ sicheres, angenehmes Griffteil.

Nachfolgend wird die Erfindung anhand eines Ausführungsbeispiels unter Bezug auf die Zeichnungen näher erläutert.
Es zeigen:
- Fig. 1:: eine schematische Seitenansicht einer Prothese in geöffnetem Zustand, mit eingesetztem Stabilisator;
- Fig. 2:: eine Ansicht wie in Fig. 1, in geschlossenem Zustand der Prothesenhälften;
- Fig. 3:: eine Seitenansicht einer Stabilisator-Feder;
- Fig. 4:: eine Draufsicht auf die Stabilisator-Feder nach Fig. 3;
- Fig. 5:: eine Seitenansicht wie in Fig. 3, mit eingesetzter Kunststoffspule;
- Fig. 6:: eine Draufsicht des Stabilisators aus Fig. 5;
- Fig. 7:: einen Schnitt nach den Linien VII-VII aus Fig. 2, eine Ausführung der Führungsbohrung über einen Führungsrechen darstellt;
- Fig. 8:: eine perspektivische Explosionsdarstellung einer Halte-/Hilfsvorrichtung mit zwei Führungsrechen;
- Fig. 9:: eine Perspektivansicht der Teile aus Fig. 8, in zusammengesetztem Zustand;
- Fig. 10:: eine Detail-Seitenansicht der Prothesenhälften mit eingebrachten kanalförmigen Ausnehmungen;
- Fig. 11:: eine Ansicht ähnlich wie in Fig. 10, beim Einführen der Führungsrechen und die Hilfsvorrichtung;
- Fig. 12:: eine Ansicht ähnlich wie in Fig. 10, jedoch mit fertig eingebrachten und eingebetteten Führungsrechen;
- Fig. 13:: eine Detail-Rückansicht mit einer fertig eingebrachten Führung;
- Fig. 14:: eine perspektivische Rückansicht eines Gebissteils mit zwei fertig eingebrachten Führungen;
- Fig. 15:: eine Teil-Perspektivansicht einer Prothesenhälfte beim Einführen eines Stabilisator-Armes durch den Einführschlitz;
- Fig. 16:: eine Ansicht ähnlich wie in Fig. 15, mit nun 90° in die vertikale Funktionsstellung verschwenkter Stabilisator-Feder
- Fig. 17:: eine Detailansicht der Rückseiten der beiden Prothesenhälften mit jeweils in Funktionsstellung eingeführter Stabilisator-Feder, in offener Prothesenstellung, und
- Fig. 18:: eine Ansicht einer Situation wie in Fig. 16, jedoch in aufeinanderliegend geschlossenem Zustand der beiden Prothesenthälften.

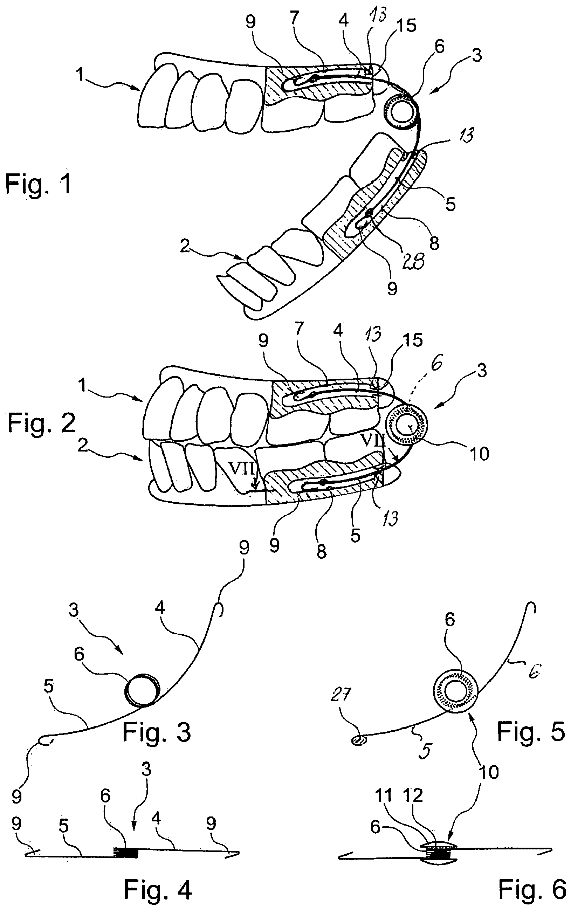

Aus **Fig. 1 und 2** ist zu erkennen, wie in einer Prothese, bestehend aus einer oberen Prothesenhälfte 1 und einer unteren Prothesenhälfte 2, eine Stabilisator-Feder 3 eingesetzt ist und wie diese abfedernd hält bzw. in entlastetem Zustand die Prothesenhälften leicht auseinandergedrückt zu halten vermag. Es ist zu sehen, wie die Stabilisator-Feder 3 im wesentlichen eine Doppelarm-Schenkelfeder darstellt, bestehend aus zwei Armen 4 und 5, die über ein Gelenk 6, das nichts anderes als der Schraubenfederteil der Doppelschenkelfeder ist, gelenkig federnd gehalten werden. Die Arme 4 und 5 sind dabei (im weitesten Sinne) teleskopisch ausgelegt, indem sie axial bewegbar in entsprechend bogenförmig ausgelegten zylindrischen Führungen 7 und 8 in den Prothesenhälften 1, 2 angeordnet sind. Die Führungen 7 und 8 sind zylindrische (geschweifte) Sacklochbohrungen, die an Ihrem stirnseitigen, offenen Ende zu Einsteckschlitzen 15 verengt sind, hier durch eine äußere Stufe 13. Die Enden der Stabilisator-Arme 4 und 5 sind jeweils mit einer hakenförmigen Öse 9 oder als flache Haken ausgeführt, die ungefähr in gleicher Ebene wie die Ebene der Stabilisator-Arme liegen, befinden sich somit in eingebautem Zustand in einer gemeinsamen vertikalen Ebene. Bei einem Versuch, die Stabilisator-Feder 3 nach hinten aus den Prothesenhälften durch einfaches Herausziehen zu entfernen, werden die Haken-Enden der Stabilisator-Arme 4, 5, die unter Federdruck an dem jeweilig vertikal oben oder unten befindlichen Wandteil der Führungen 7, 8 gleitend anstehen, mit deren Haken-Ösen 9 an den Stufen 13 sich einhängen bzw. an diesen hängen bleiben. Erst ein Verdrehen und/oder federndes Zusammendrücken der Arm-Enden ermöglicht ein Hindurchtreten der Haken 9 durch die Verengung des Einführschlitzes 15. Nahe den Ösen 9 ist je eine perlenförmige Pastille 28 angeordnet, die geringfügig dicker ist (einige Zehntel mm dicker) als die Breite des Einführschlitzes 15, so dass ein elastisches Einführen oder Herausziehen erfolgt.

Wie insbesondere aus **Fig. 2** zu erkennen ist, ist am Spiral-Gelenk 6 der Stabilisators-Feder 3 eine Verblendung 10 in Art einer Kunststoffspule vorgesehen, die das Schraubenfedergelenk vor grobem Verschmutzen und gleichzeitig den Träger vor unangenehmen Einwirkungen durch die Schraubenfeder des Gelenks schützt (siehe hierzu auch Fig. 5 und 6). Auch wird veranschaulicht, wie die beiden Stabilisatorarme 4 und 5 und die jeweils zugehörigen Führungen 7 und 8 jeweils eine unterschiedliche Schweifung bzw. Krümmung besitzen, da der besonderen Bewegung des Unterkiefers und dadurch auch der Gleitbewegung der Stabilisatorarme Rechnung zu tragen war. Es ist zu erkennen, dass der untere Arm 5 und damit auch die untere Führung 8, eine stärkere Krümmung bzw. Schweifung aufweist, als der obere Arm 4 und die zugehörige Führung 7. Der untere Arm 5 und die Führung 8 folgen dabei zumindest annähernd einer so genannten Kurve von Spee, wie dies auch näher in der WO 2007/016753 A1 beschrieben ist.

In **Fig. 3 und 4** ist die Stabilisator -Feder 3 in entspanntem, uneingebautem Zustand dargestellt. Wie bereits vorbeschrieben, besteht dieser aus den Armen 4 und 5, an deren äußeren Enden jeweils eine Öse 9 eingebogen ist, während sie an ihren inneren Zonen mit der das Gelenk 6 darstellenden Schraubenfeder verbunden sind. Es kann somit ausgesagt werden, das die Stabilisator -Feder 3 nichts anderes ist, als eine einfache Doppelschenkelfeder, deren beiden abragenden Schenkelarme jeweils mit einer Öse versehen sind und zwar in gleicher Ebene wie die gebogenen Arme 4 und 5. Selbstverständlich ist, dass die Stabilisator-Doppelschenkelfeder von Material und Dimensionierung her so ausgelegt ist, dass eine ausreichende Funktionssicherheit gegeben ist, insbesondere sicher in der Führung und im gefederten Auseinanderhalten der beiden Prothesenhälfte 1, 2. Hiermit wird ein ungewolltes Aufklappen bzw. Herunterklappen vermieden, jedoch auch ein zu starkes Auseinanderdrücken, so dass der Prothesenträger ständig gegen die Federkraft einwirken müßte, durch Zudrücken des Mundes bzw. festes Ineinanderdrücken der Kieferhälften.

**Fig. 5 und 6** zeigen in der dargestellten Ausführung die gleiche Stabilisator -Feder wie Fig. 3, nur dass hier zusätzlich die Verblendung 10 in Form einer Kunststoffspule am Gelenk 6 vorgesehen bzw. angebracht ist. Diese spulenförmige Verblendung 10 besitzt zwei pilzförmige Flanschteile 11, die durch einen das Gelenk 6 zentrisch durchdringenden und ausfüllenden Fußteil 12 miteinander fest verbunden sind bzw. verbindbar sind. Die Flanschteile 11 schließen dabei das Gelenk 6 zu beiden Stirnseiten bündig ab und verhindern hiermit einerseits ein Eindringen von Verunreinigungen in den Windungsteil des Gelenks 6, als auch einen direkten Kontakt mit den beweglichen Spiralteilen des Gelenks. Größe und Wölbung der Flanschteile 11 entsprechen dabei ungefähr derjenigen eines Backenzahnes. Zudem ist in Fig. 5 am Haken-Ende des Armes 5 ein flacher Farb-Knopf 27 eingebracht bzw. befestigt, der eine farbige Zuordnung zu einem ebenfalls entsprechend farbig ausgelegten Einführschlitz leicht ermöglicht.

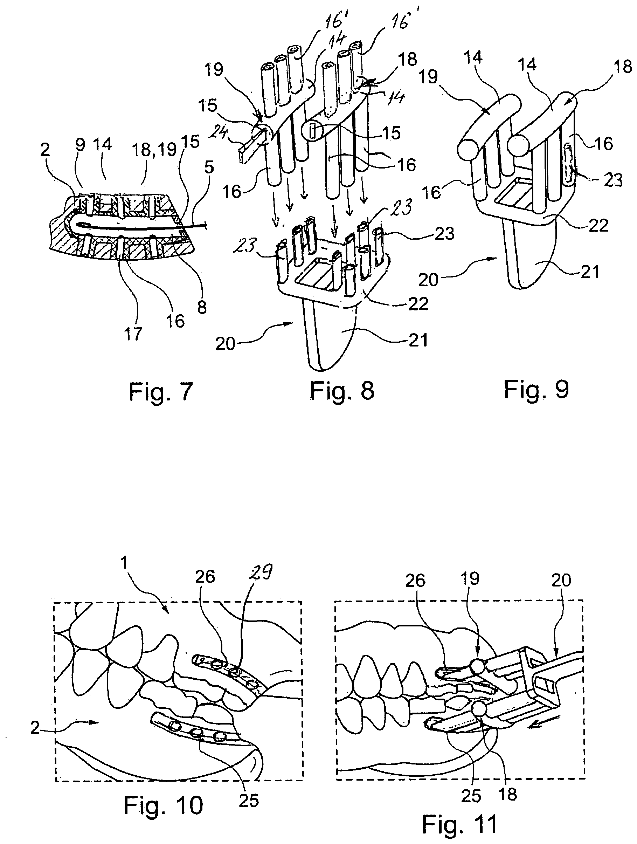

In **Fig. 7**, die einen im Wesentlichen horizontalen Schnitt durch die Führung 8 (siehe Fig. 2) darstellt, ist veranschaulicht, wie die Führung 8 bzw. die Führungsbohrung in einer Führungshülse 14 vorgesehen ist, die in horizontaler Ebene gerade ist und lediglich in vertikaler Ebene eine leichte Schweifung, entsprechend der aus Fig. 1 und 2 entnehmbaren Form besitzt. Diese Führungshülse 14 ist an ihrem Einführende bis auf einen schmalen Einführschlitz 15 geschlossen. Es ist hier zu erkennen, das dieser Schlitz eine horizontale Ausrichtung, d. h. im wesentlichen parallel zur Kaufläche des Gebisses, besitzt. Von der Führungshülse 14 führen zur Außenseite der Prothesenhälfte sich öffnende Spülröhrchen 16 und zur Innenseite sich öffnende Spülröhrchen 16', in denen Spüllöcher 17 bzw. 17' vorgesehen sind, die das Innere der Führungshülse 14 mit der Außen- bzw. der Innenseite verbinden. Hierdurch können in die Führungshülse 14 eingetretener Speichel und Essensreste sehr sauber ausgewaschen werden und/oder insbesondere durch die Gleitbewegung der Stabilisatorarme in dem Hülseninneren, selbsttätig wieder austreten bzw. wieder ausgeschoben werden. Es ist zu erkennen, dass die röhrchenförmige Führungshülse 14 mit den einstückig mit ihr verbundenen Spülröhrchen 16, 16' einen doppel-kammförmigen Führungsrechen 18, 19 bilden.

**Fig. 8** zeigt, wie die Führungsrechen 18 und 19 auf eine Hilfsvorrichtung 20 aufzustecken sind, um eine leichtere Montage bzw. Einbettung in die Prothesenhälften zu ermöglichen. Die Hilfsvorrichtung 20 besteht dabei aus einem Griffteil 21, an dem ein Flanschteil 22 vorgesehen ist, auf dem wiederum mindestens zwei, hier dargestellt drei Reihen von Haltedornen 23 angeordnet sind. Die Anzahl der Haltedorne 23 und deren Beabstandung zueinander und der Dornen-Dreierreihen voneinander und auch die geschweifte Form der Reihenanordnung, entsprechen der Form der Führungen 7 im Gebiss und zwar in fest zusammenmontierter Arbeits- bzw. Einsetzstellung für die Führungsrechen 18, 19. Dabei sind hier die beiden Führungsrechen 18, 19 auf die ersten beiden Dornenreihen aufgesteckt, während die dritte, hier freie Dornenreihe zum Aufstecken des Führungsrechens 18 im Falle eines großen, hohen Gebisses dienen kann. Zudem ist der Durchmesser der Dorne 23 so ausgelegt, dass die Führungsrechen 18, 19 über deren Spülröhrchen 16 auf die jeweiligen Dornenreihen aufgesteckt werden können, was hier durch die explosionsartige Darstellung der drei Teile zueinander, nämlich der Hilfsvorrichtung und der beiden Führungsrechen 18 und 19, erkennbar ist.

**Fig. 9** veranschaulicht einen weiteren Arbeitsschritt und zwar die Situation, in der die beiden Führungsrechen 18, 19 über ihre Spülröhrchen 16 auf den Dornen 23 (hier sind der Einfachheit halber nur zwei Dornenreihen dargestellt und die Führungsrechen besitzen nur eine Reihe von Spülröhrchen 16) der Hilfsvorrichtung 20 bis auf Anschlag fest aufgesteckt sind. Wie bereits im Zusammenhang mit Fig. 8 ausgeführt, ist nun in Fig. 9 gut zu erkennen, wie die Führungshülsen 14 der beiden Führungsrechen 18, 19 in genauer Ausrichtung zueinander mit ihrer Bogenform in gleicher Ebene liegen, wodurch eine optimale gemeinsame Handhabbarkeit beim Einsetzen in die Prothesenteile sichergestellt ist.

In **Fig. 10** ist zu erkennen, wie jeweils in den für die Montage in fester, aufeinander liegender Zuordnung gehaltenen Prothesenhälften 1, 2 jeweils eine kanalförmige Aussparung 25 bzw. 26 eingebracht ist, wobei diese Aussparungen oder Nuten jeweils zur Prothesenhälften-Seite und -Rückseite hin offen sind. Es ist ohne weiteres verständlich, dass für den Einsatz von Doppelkamm-Führungsrechen, also mit beidseitig vorgesehenen Spülröhrchen 16, 16', in den Aussparungen 25, 26 jeweils nach innen führende Bohrungen 29 zur Einführung bzw. Aufnahme der zweiten Reihe von Spülröhrchen 16' einzubringen sind. Es könnte aber statt dessen, also statt kanalförmiger Aussparungen mit Bohrungen, entsprechend durchgängige Längsschlitze vorgesehen sein.

**Fig. 11** zeigt, wie die beiden auf/in der Halte- bzw. Hilfsvorrichtung 20 fest aufgesteckten Führungsrechen 18, 19 in die zwei kanalförmigen Aussparungen 25 und 26 eingesetzt werden. Es ist zu erkennen, dass die geschweiften Führungshülsen 14 der Führungsrechen 18, 19 problemlos in die Aussparungen 25, 26 einsetzbar sind. Zwar ist nicht dargestellt, wie die Führungsrechen 18, 19 in die (geraden oder geschweiften) Aussparungen 25, 26 bis auf Tiefenanschlag eingesetzt werden (dies ist aber problemlos vorstellbar, auch bei Doppelkamm-Führungsrechen) und wie danach die verbleibenden Zwischenräume zwischen den Führungsrechen und den Aussparungen mit entsprechendem Material ausgegossen wird. Bei Vorhandensein von schlitzförmigen statt kanalförmigen Aussparungen 25, 26 ist kein Anschlag vorhanden und die Führungshülsen sind über die Hilfsvorrichtung genau im Schlitz zu positionieren und über das Füllmaterial darin festzulegen.

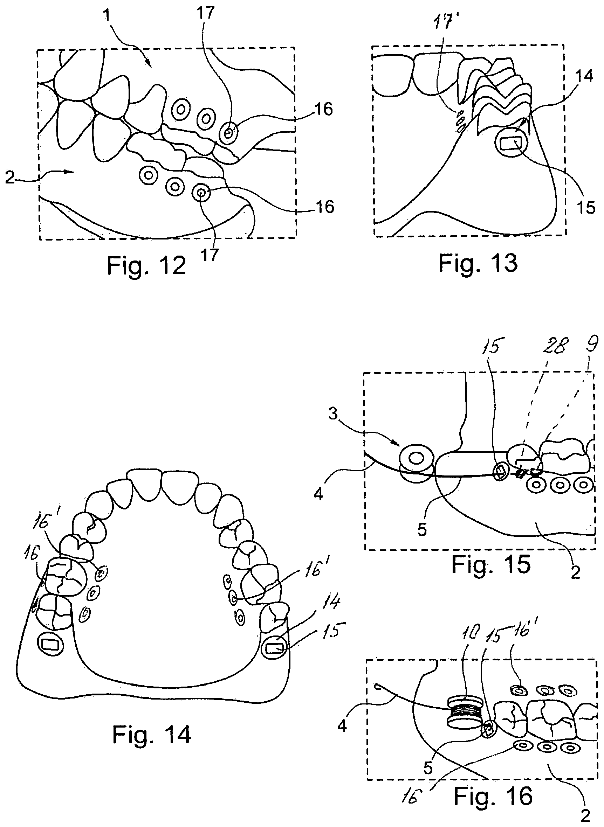

**Fig. 12** zeigt die Situation der fertig eingegossenen Führungsrechen, wobei bereits über die Aussparungen (Nuten) seitlich überstehenden Spülröhrchenteile abgearbeitet und die gesamte Seitenfläche nebst entsprechenden Kanten geglättet und in gleicher Feinheit poliert worden sind, wie die restliche Prothesenfläche. Dabei sind von den beiden Führungsrechen lediglich die Stirnseiten der äußeren Spülröhrchen 16 und darin befindlichen Spüllöcher 17 zu sehen und das auch relativ undeutlich, wenn das Röhrchenmaterial mit demjenigen der Prothesenkörper und dem Füllmaterial zumindest annähernd farbgleich sind.

**Fig-13**, aber auch **Fig. 14** zeigen eine perspektivische Rückansicht bzw. Teil-Rückansicht einer Prothesenhälfte bzw. eines Teiles einer Prothesenhälfte in denen die bis auf insbesondere einen horizontalen Einführungsschlitz 15 geschlossene äußere Stirnseite der Führungshülsen 14 zu erkennen sind, sowie die Spüllöcher 17.

**Fig. 15** veranschaulicht, wie eine Stabilisator -Feder 3 mit seinem einen Arm 5 in horizontaler Ausrichtung, d. h. in einer Ausrichtung in der die Stabilisatorebene, in der auch die Ösen an den Enden der Stabilisator-Arme liegen, in gleicher Ebene mit den Einführschlitzen 15 der Führungshülse liegen, in die Führungshülse eingesetzt wird. Dabei ist erkennbar, wie der,Einführungsschlitz 15 gleichzeitig als Gleitbahn oder Gleitanlage für den Arm 5 dient. Zudem ist in unterbrochener Linie eingezeichnet erkennbar, wie die am Arm 5 nahe der Öse 9 vorhandene Pastille 28 bei weiteren Herausschieben oder -ziehen des Armes an dem Einführschlitz 15 anstoßen wird und ein unbeabsichtigtes Herausrutschen verhindert.

**Fig. 16** zeigt als weiteren Schritt, wie der Stabilisator-Arm 5 in die Führungshülse im wesentlichen komplett eingeschoben ist und eine Verschwenkung um ca. 90° erfahren hat, so dass die Stabilisator-Feder insgesamt nunmehr in einer vertikalen Ausrichtung zur Längserstreckung des Einführungsschlitzes steht. Ein komplettes Herausziehen des Armes ist nun nicht mehr möglich, da sich dieser über seine Öse an der inneren Stirnfläche der Führungshülse bzw. des Einsteckschlitzes verhakt.

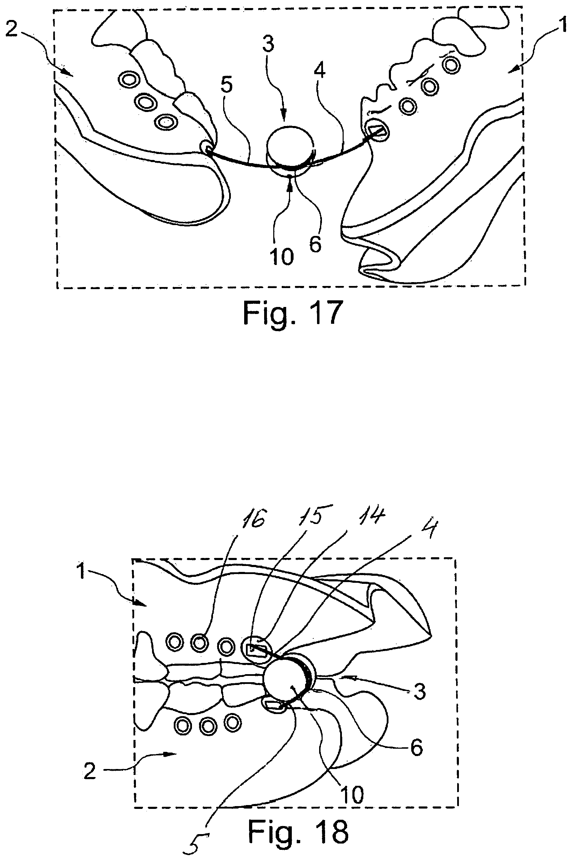

In **Fig. 17** ist dargestellt, wie die Stabilisator-Feder 3 über seine Arme 4 und 5 bereits in die Prothesenteile 1 und 2 in Funktionsstellung eingesetzt ist, jedoch noch in offener, noch nicht zusammengeschobener, aufeinanderliegend vorgespannter Funktionsstellung. Schließlich zeigt **Fig. 18** die beiden Prothesenhälften 1 und 2 in fest aufeinander liegendem Zustand und mit in Funktionsstellung eingesetzter Stabilisator-Feder 3. Es ist zu erkennen, dass das Gelenk 6 der Stabilisator-Feder ganz nahe an der hinteren Stirnfläche der beiden Prothesenteile, gleich hinter den beiden Zahnreihen angeordnet ist und dass die Verblendung 10 in Art einer Kunststoffspule über die Gelenkseiten gezogen, einen optimal abgerundeten Abschluss darstellt.

### Bezugszeichenliste

- 1.: Prothesenoberhälfte, obere
- 2.: Prothesenunterhälfte, untere
- 3_{.}: Stabilisator-Feder
- 4.: Stabilisator-Arm
- 5.: Stabilisator-Arm
- 6.: Gelenk
- 7.: Führung
- 8.: Führung
- 9.: Öse (Haken) Erweiterung
- 10.: Verblendung (Kunststoffspule)
- 11.: Flanschteil
- 12.: Fußteil
- 13.: Stufe
- 14.: Führungshülse
- 15.: Einführschlitz, Verengung
- 16.: Spülröhrchen
- 17.: Spülloch
- 18.: Führungsrechen
- 19.: Führungsrechen
- 20.: Hilfsvorrichtung
- 21.: Griffteil
- 22.: Flanschteil
- 23.: Haltedorne
- 24.: Keil
- 25.: Aussparung, kanalförmig (Nut)
- 26.: Aussparung, kanalförmig (Nut)
- 27.: Farb-Knopf
- 28.: Pastille
- 29.: Bohrungen

## Patentansprüche

1. Zahnprothese, die aus zwei mit je einer Zahnreihe versehenen Prothesenhälften (1, 2) und einer Stabilisator-Feder (3) besteht, mit:
- zwei Armen (4, 5) der Stabilisator-Feder (3), die miteinander gelenkig verbunden sind und gleichzeitig lange gebogene Arme der Stabilisator-Feder (3) darstellen, so, dass die Arme (4,5) auseinander gedrückt gehalten sind,
- wobei die Arme (4, 5) axial jeweils in einer entsprechend gebogenen oder geschweiften zylindrischen Führung (7, 8) teleskopisch bewegbar sind, wobei die Führungen (7, 8) in den Prothesenhälften (1, 2) entlang der Zahnreihen vorgesehen sind und jeweils ein äußeres Einführende aufweisen,
**dadurch gekennzeichnet,**
- **dass** die Führungen (7, 8) an ihrem jeweiligen äußeren Einführende bis auf eine Verengung als Einführschlitz (15) stirnseitig geschlossen sind,
- **dass** die Arme (4, 5) Enden aufweisen, und
- **dass** die Enden der Arme (4, 5) Erweiterungen (9) besitzen und so dimensioniert sind, dass sie durch den Einführschlitz (15) der Führungen (7, 8) durchsteckbar sind.

2. Zahnprothese nach Anspruch 1, **dadurch gekennzeichnet,**
- **dass** in eingebauter Funktionsstellung der Stabilisator-Feder (3) die Erweiterungen (9), die flächig sind; in einem Winkel von ca. 90° ± 20° zur Längserstreckung des Einführschlitzes (15) ausgerichtet sind.

3. Zahnprothese nach Anspruch 1 oder 2, **dadurch gekennzeichnet,**
- **dass** der Einführschlitz (15) in Form eines Schnappverschlusses, eines federbelasteten Stiftes oder einer elastischen geschlitzten Membran, jeweils farblich unterschiedlich ausgelegt, ausgebildet ist.

4. Zahnprothese nach einem der vorstehenden Ansprüche, **dadurch gekennzeichnet,**
- **dass** die Erweiterungen (9) an den Enden der Arme (4, 5), aus dem drahtförmigen Material der Arme ausgeformt oder separate, nachträglich an die Enden der Arme (4, 5) auf- oder angesetzte Teile sind.

5. Zahnprothese nach einem der vorstehenden Ansprüche, **dadurch gekennzeichnet,**
- **dass** die Erweiterungen (9) als Ösen oder überwiegend geschlossene Haken geringfügig breiter sind als die Länge der Einführschlitze (15) und beim Herausziehen oder Führen unter Druck oder Zug elastisch nachgebend ein- oder ausschnappen.

6. Zahnprothese nach Anspruch 5, **dadurch gekennzeichnet,**
- **dass** an den Armen (4, 5) nahe den Ösen jeweils eine perlenförmige Pastille (28) in Form einer Kugel, Zylinderhülse oder Kalotte, aus Glas, Kunststoff oder Edelstahl fest angeordnet ist, die einige Zehntel mm dicker ist, als die Breite des Einführschlitzes (15), zum Ein- und Ausschieben unter Widerstand in Art eines Schnappverschlusses, und
- **dass** die Pastille (28) auf den Arm aufgebracht ist oder zusammen mit der zugehörigen Öse ein eigenständiges Teil ist, das am geraden Armende klemmend aufgeschoben oder befestigt ist.

7. Zahnprothese nach einem der vorstehenden Ansprüche, **dadurch gekennzeichnet,**
- **dass** die Führung (7, 8) Teil einer rohrförmige Führungshülse (14) ist, die in dem Prothesenmaterial so eingebettet ist, dass ihr äußeres Einsteckende stirnseitig abschließend an der Rückseite der jeweiligen Prothesenhälfte (1, 2) endet, vorzugsweise bündig zu diesem oder mit diesem.

8. Zahnprothese nach Anspruch 7, **dadurch gekennzeichnet,**
- **dass** die Führungshülse (14) ein Kunststoffröhrchen ist, dessen Inneres über mindestens ein, vorzugsweise drei Löcher oder radiale seitliche Öffnungen zumindest mit der Außenseite, vorzugsweise auch mit der Innenseite der Prothesenhälften (1, 2) in Verbindung steht, wodurch Spüllöcher (17) oder Belüftungslöcher gebildet sind.

9. Zahnprothese nach Anspruch 8, **dadurch gekennzeichnet,**
- **dass** die Spüllöcher (17) durch Kunststoffröhrchen als Spülröhrchen (16, 16') gebildet sind, die mit der röhrchenförmigen Führungshülse (14) verbunden sind, vorzugsweise einstückig mit dieser ausgeformt sind, und einen einseitigen Führungsrechen oder einen Doppel-Führungsrechen (18, 19) bilden.

10. Zahnprothese nach einem der vorstehenden Ansprüche, **dadurch gekennzeichnet,**
- **dass** ein Gelenk (6) der Stabilisator-Feder (3) als Windungen von einer Verblendung (10) in Art einer Kunststoffspule axial gehalten oder umfasst ist.

11. Zahnprothese nach Anspruch 10, **dadurch gekennzeichnet,**
- **dass** die Verblendung (10) aus zwei Flanschteilen (11) besteht, die in Art eines Druckknopfes ausgebildet, axial zusammendrückbar und arretierbar sind, so dass die Köpfe der Flanschteile (11) die Stabilisator-Feder außen- und/oder stirnseitig anliegend umfassen und gebildete Spiralwindungen auf ein vorgegebenes Maß axial zusammenhalten halten, und
**dass** Größe / Fläche und Wölbung der Flanschteile in etwa denjenigen des letzten Backenzahnes entsprechen.

12. Zahnprothese nach einem der vorstehenden Ansprüche, **dadurch gekennzeichnet,**
- **dass** die Erweiterungen (9) der Arme (4, 5) der Stabilisator-Feder (3) in gleicher Biegungs-Ebene mit derjenigen der Arme (4, 5) angeordnet oder gebogen sind.

13. Zahnprothese nach einem der vorstehenden Ansprüche, **dadurch gekennzeichnet,**
- **dass** die Einführschlitze (15) der Führungen (7, 8) jeweils farblich unterschiedlich ausgelegt sind.

14. Zahnprothese nach einem der vorstehenden Ansprüche, **dadurch gekennzeichnet,**
- **dass** die Erweiterungen (9) überwiegend geschlossene Haken sind, und
- **dass** an einem Haken ein Farb-Knopf (27) eingebracht ist, der einem Einführschlitz (15) farblich zugeordnet ist.

15. Zahnprothese nach einem der vorstehenden Ansprüche, **dadurch gekennzeichnet,**
- **dass** die Erweiterungen (9) an den Enden der Arme (4, 5) jeweils unterschiedlich farblich ausgelegt sind.

## Claims

1. Dental prosthesis consisting of two prosthesis halves (1, 2), each provided with a row of teeth, and a stabiliser spring (3), comprising:
- two arms (4, 5) of the stabiliser spring (3), which are articulated to one another and simultaneously form long, curved arms of the stabiliser spring (3), in such a way that the arms (4, 5) are held pressed apart,
- the arms (4, 5) each being telescopically movable axially in a correspondingly curved or sweeping cylindrical guide (7, 8), the guides (7, 8) being provided in the prosthesis halves (1, 2) along the rows of teeth and each comprising an outer insertion end,
**characterised in that**
- the guides (7, 8) are closed, at the end faces at the respective outer insertion ends thereof, as far as a constriction acting as an insertion slit (15),
- the arms (4, 5) comprise ends, and
- the ends of the arms (4, 5) have extensions (9), and are dimensioned in such a way that they can be placed through the insertion slit (15) of the guides (7, 8).

2. Dental prosthesis according to claim 1, **characterised in that**
- in the installed functional position of the stabiliser spring (3) the extensions (9), which are planar, are orientated at an angle of approximately 90° ± 20° to the longitudinal extension of the insertion slit (15).

3. Dental prosthesis according to either claim 1 or claim 2, **characterised in that**
- the insertion slit (15) is in the form of a spring lock, a spring-loaded pin or a resilient slitted membrane, configured different in colour in each case.

4. Dental prosthesis according to any of the preceding claims, **characterised in that**
- the extensions (9) on the ends of the arms (4, 5) are formed from the wire material of the arms or are separate parts subsequently placed on the ends of the arms (4, 5).

5. Dental prosthesis according to any of the preceding claims, **characterised in that**
- the extensions (9), as eyes or predominantly closed hooks, are slightly wider than the length of the insertion slits (15), and spring in or out in a resiliently yielding manner when pulled out or guided under compression or tension.

6. Dental prosthesis according to claim 5, **characterised in that**
- on the arms (4, 5), a pearl-shaped pastille (28) in the form of a ball, cylindrical sleeve or dome, made of glass, plastics material or high-grade steel, is arranged close to the eyes, and is a few tenths of a mm thicker than the width of the insertion slit (15), for sliding in and out with resistance in the manner of a spring lock, and
- **in that** the pastille (28) is attached on the arm or, together with the associated eye, is an independent part which is slid on or fixed at the straight arm end.

7. Dental prosthesis according to any of the preceding claims, **characterised in that**
- the guide (7, 8) is part of a tubular guide sleeve (14), which is embedded in the prosthesis material in such a way that the outer insertion end thereof ends at the end face so as to terminate at the rear face of the associated prosthesis half (1, 2), preferably flush therewith or together therewith.

8. Dental prosthesis according to claim 7, **characterised in that**
- the guide sleeve (14) is a plastics material tubule, the interior of which is connected at least to the outer face, preferably also to the inner face, of the prosthesis halves (1, 2) via at least one, preferably three, holes or radial side openings, causing rinsing holes (17) or ventilation holes to be formed.

9. Dental prosthesis according to claim 8, **characterised in that**
- the rinsing holes (17) are formed by plastics material tubules as rinsing tubules (16, 16') which are connected to the tubule-shaped guide sleeve (14), preferably being formed integrally therewith, and form a one-sided guide grate or a double guide grate (18, 19).

10. Dental prosthesis according to any of the preceding claims, **characterised in that**
- an articulation (6) of the stabiliser spring (3) in the form of windings is held or enclosed by a sheathing (10) in the manner of a plastics material coil.

11. Dental prosthesis according to claim 10, **characterised in that**
- the sheathing (10) consists of two flange parts (11), which are formed in the manner of a push-button, can be pressed together axially, and can be locked, in such a way that the heads of the flange parts (11) enclose the stabiliser spring, lying against het outer face or end face thereof, and hold formed spiral windings together axially to a predetermined extent, and
- the size/area and curvature of the flange parts approximately correspond to those of the final jaw tooth.

12. Dental prosthesis according to any of the preceding claims, **characterised in that**
- the extensions (9) of the arms (4, 5) of the stabiliser springs (3) are arranged in the same curvature plane as the arms (4, 5).

13. Dental prosthesis according to any of the preceding claims, **characterised in that**
- the insertion slits (15) of the guides (7, 8) are configured different in colour in each case.

14. Dental prosthesis according to any of the preceding claims, **characterised in that**
- the extensions (9) are predominantly closed hooks, and
- a coloured button (27), associated by colour with an insertion slit (15), is introduced on a hook.

15. Dental prosthesis according to any of the preceding claims, **characterised in that**
- the extensions (9) on the ends of the arms (4, 5) are configured different in colour in each case.

## Revendications

1. Prothèse dentaire qui est constituée de deux moitiés de prothèse (1, 2), munies respectivement d'une rangée de dents, et d'un ressort stabilisateur (3), comprenant :
- deux bras (4, 5) du ressort stabilisateur (3), lesquels sont reliés entre eux de manière articulée, tout en représentent des grands bras arqués du ressort stabilisateur (3), de sorte que les bras (4,5) sont maintenus en étant écartés l'un de l'autre,
- dans laquelle les bras (4, 5) sont déplaçables de manière télescopique, respectivement axialement dans un guidage (7, 8) cylindrique, courbé ou bombé de manière correspondante, dans laquelle les guidages (7, 8) sont ménagés dans les moitiés de prothèse (1, 2) le long des rangées de dents et présentent respectivement une extrémité d'insertion extérieure,
**caractérisée en ce,**
- **que** les guidages (7, 8) sont fermés côté frontal sur leur extrémité d'insertion extérieure, sauf un rétrécissement en tant que fente d'insertion (15),
- en ce que les bras (4, 5) présentent des extrémités, et
- en ce que les extrémités des bras (4, 5) possèdent des élargissements (9) et sont dimensionnées de manière à être insérables à travers la fente d'insertion (15) des guidages (7, 8).

2. Prothèse dentaire selon la revendication 1, **caractérisée en ce**
- **qu'**en position montée de fonctionnement du ressort stabilisateur (3), les élargissements (9), qui sont plats, sont orientés dans un angle d'env. 90° ± 20° par rapport à l'étendue longitudinale de la fente d'insertion (15).

3. Prothèse dentaire selon la revendication 1 ou 2, **caractérisée en ce**
- **que** la fente d'insertion (15) est réalisée en forme d'une fermeture à déclic, d'une tige contrainte par ressort ou d'une membrane fendue élastique, respectivement conçue de couleur différente.

4. Prothèse dentaire selon l'une quelconque des revendications précédentes, **caractérisée en ce**
- **que** les élargissements (9) aux extrémités des bras (4, 5) sont des pièces formées à partir de la matière en forme de fil des bras ou sont des pièces séparées, posées ultérieurement sur ou contre les extrémités des bras (4, 5).

5. Prothèse dentaire selon l'une quelconque des revendications précédentes, **caractérisée en ce**
- **que** les élargissements (9), en tant qu'oeillets ou crochets principalement fermés, sont légèrement plus larges que la longueur des fentes d'insertion (15) et, lorsqu'ils sont sortis ou guidés sous pression ou tension, en ce qu'ils s'enclenchent ou se désenclenchent en se relâchant de manière élastique.

6. Prothèse dentaire selon la revendication 5, **caractérisée en ce**
- **que** sur les bras (4, 5), de manière proche des oeillets, une pastille (28) en forme de perle, en forme d'une bille, d'une douille cylindrique ou d'une calotte, en verre, en matière plastique ou en acier inoxydable, est respectivement disposée de manière fixe, laquelle est plus épaisse de quelques dixièmes de mm que la largeur de la fente d'insertion (15), destinée à être enfoncée ou sortie avec résistance à la manière d'une fermeture à déclic, et
- en ce que la pastille (28) est placée sur le bras ou en ce qu'avec l'oeillet correspondant, elle est une propre pièce qui est poussée en étant coincée sur l'extrémité rectiligne du bras ou y est fixée.

7. Prothèse dentaire selon l'une quelconque des revendications précédentes, **caractérisée en ce**
- **que** le guidage (7, 8) fait partie d'une douille de guidage (14) tubulaire qui est incorporée dans la matière de la prothèse de manière à ce que son extrémité d'emboîtement extérieure se termine côté frontal en se raccordant au côté arrière de la moitié de prothèse respective (1, 2), de préférence de manière affleurée par rapport à cette extrémité ou avec cette extrémité.

8. Prothèse dentaire selon la revendication 7, **caractérisée en ce**
- **que** la douille de guidage (14) est un petit tube en matière plastique, dont l'intérieur communique, par l'intermédiaire d'au moins un trou, de préférence trois trous ou ouvertures latérales radiales, au moins avec le côté extérieur, de préférence également avec le côté intérieur des moitiés de prothèse (1, 2), sur quoi des trous de rinçage (17) ou des trous d'aération sont formés.

9. Prothèse dentaire selon la revendication 8, **caractérisée en ce**
- **que** les trous de rinçage (17) sont formés par des petits tubes en matière plastique en tant que petits tubes de rinçage (16, 16') qui sont reliés à la douille de guidage (14) en forme de petit tube, en ce qu'ils sont formés de préférence d'une seule pièce avec celle-ci, et forment un râteau de guidage sur un seul côté ou un double râteau de guidage (18, 19).

10. Prothèse dentaire selon l'une quelconque des revendications précédentes, **caractérisée en ce**
- **qu'**une articulation (6) du ressort stabilisateur (3) est maintenue ou entourée axialement en tant qu'enroulements par un revêtement (10) à la façon d'une bobine en matière plastique.

11. Prothèse dentaire selon la revendication 10, **caractérisée en ce**
- **que** le revêtement (10) est constitué de deux parties de bride (11) qui sont réalisées à la façon d'un bouton pression, pouvant être pressées ensemble axialement et bloquées de sorte que les têtes des parties de bride (11) comprennent le ressort stabilisateur de manière adjacente, côté extérieur et/ou côté frontal, et qu'elles maintiennent ensemble axialement, à une dimension prédéterminée, des enroulements hélicoïdaux formés, et
- en ce que la taille / la surface et la courbure des parties de bride correspondent approximativement à celles de la dernière molaire.

12. Prothèse dentaire selon l'une quelconque des revendications précédentes, **caractérisée en ce**
- **que** les élargissements (9) des bras (4, 5) du ressort stabilisateur (3) sont disposés ou cintrés dans le même plan de cintrage que celui des bras (4, 5).

13. Prothèse dentaire selon l'une quelconque des revendications précédentes, **caractérisée en ce**
- **que** les fentes d'insertion (15) des guidages (7, 8) sont respectivement conçues de couleur différente.

14. Prothèse dentaire selon l'une quelconque des revendications précédentes, **caractérisée en ce**
- **que** les élargissements (9) sont principalement des crochets fermés, et
- en ce que sur un crochet est placé un bouton en couleur (27) auquel est associée une fente d'insertion (15) de manière colorée.

15. Prothèse dentaire selon l'une quelconque des revendications précédentes, **caractérisée en ce**
- **que** les élargissements (9) aux extrémités des bras (4, 5) sont respectivement conçus de couleur différente.
